(19) Europäisches Patentamt

European Patent Office

Office européen des brevets

(11) Veröffentlichungsnummer: **0 321 879**
**A2**

(12) **EUROPÄISCHE PATENTANMELDUNG**

(21) Anmeldenummer: **88121099.1**

(22) Anmeldetag: **16.12.88**

(51) Int. Cl.⁴: **G01N 21/74**

(30) Priorität: **19.12.87 DE 3743286**
**02.02.88 DE 3802968**

(43) Veröffentlichungstag der Anmeldung:
**28.06.89 Patentblatt 89/26**

(84) Benannte Vertragsstaaten:
**CH DE FR GB IT LI NL**

�samelder: **Bodenseewerk Perkin-Elmer & Co.
GmbH
Alte Nussdorfer Strasse 15 Postfach 1120
D-7770 Überlingen/Bodensee(DE)**

(72) Erfinder: **Tamm, Rolf
Am Fohrenbühl 8
D-7777 Salem 2(DE)**
Erfinder: **Roedel, Günther
Hinter den Gärten 13
D-7776 Owingen(DE)**

(74) Vertreter: **Weisse, Jürgen, Dipl.-Phys. et al
Patentanwälte Dipl.-Phys. Jürgen Weisse
Dipl.-Chem. Dr. Rudolf Wolgast Bökenbusch
41 Postfach 11 03 86
D-5620 Velbert 11 Langenberg(DE)**

(54) Ofen zur thermoelektrischen Atomisierung.

(57) Ein Ofen zur elektrothermischen Atomisierung von Proben für die Atomabsorptions - Spektroskopie enthält einen rohrförmigen, elektrisch leitenden Ofenteil (10), und einen an den Ofenteil (10) angeformten, über einen Steg (20) im Abstand von der Wandung des Ofenteils (10) in dem Ofenteil (10) gehaltenen Innenteil (18), der sich in Axialrichtung nur über einen mittleren Bereich des Ofenteils (10) erstreckt. Der Innenteil (18) ist zylinderschalenförmig ausgebildet ist. Der rohrförmige Ofenteil (10) weist in der Mitte eine seitliche Eingabeöffnung (16) auf. Der Innenteil (18) ist der Eingabeöffnung (16) gegenüberliegend angeordnet und zu der Eingabeöffnung (16) hin offen ist. Der Innenteil (18) ist auf der der Eingabeöffnung (16) abgewandten Seite durch den Steg (20), der sich in Umfangsrichtung über einen Teil des Umfangs des Innenteils (18) erstreckt, mit dem rohrförmigen Ofenteil (10) verbunden. Der Steg (20) ist mit einer Mehrzahl von axialen Bohrungen (34) versehen.

Fig. 2

## Ofen zur elektrothermischen Atomisierung von Proben für die Atomabsorptions - Spectroskopie

### Technisches Gebiet

Die Erfindung betrifft einen Ofen zur elektrothermischen Atomisierung von Proben für die Atomabsorptions -Spektroskopie, enthaltend

(a) einen rohrförmigen, elektrisch leitenden Ofenteil, und

(b) einen an den Ofenteil angeformten, über Stege im Abstand von der Wandung des Ofenteils in dem Ofenteil gehaltenen Innenteil, der sich in Axialrichtung nur über einen mittleren Bereich des Ofenteils erstreckt.

Atomabsorptions - Spektrometer dienen zur Bestimmung der Menge oder Konzentration eines gesuchten Elementes in einer Probe. Zu diesem Zweck wird von einer linienemittierenden Lichtquelle, beispielsweise einer Hohlkathodenlampe, ein Meßlichtbündel auf einen photoelektrischen Detektor geleitet. Im Strahlengang dieses Meßlichtbündels ist eine Atomisierungsvorrichtung angeordnet. In dieser Atomisierungsvorrichtung wird die zu untersuchende Probe atomisiert, so daß ihre Bestandteile in atomarem Zustand vorliegen. Das Meßlichtbündel enthält die Resonanzlinien des gesuchten Elements. Diese Resonanzlinien des Meßlichtbündels werden von den Atomen des gesuchten Elements in der Atomwolke absorbiert, während im · Idealfall die anderen in der Probe enthaltenen Elemente das Meßlichtbündel nicht beeinflußen. Das Meßlichtbündel erfährt daher eine Schwächung, die ein Maß für die Anzahl der im Weg des Meßlichtbündels befindlichen Atome des gesuchten Elements und damit je nach dem angewandten Atomisierungsverfahren ein Maß für die Konzentration oder die Menge des gesuchten Elementes in der Probe darstellt.

Als Atomisierungsvorrichtung für hochempfindliche Messungen verwendet man vorzugsweise die elektrothermische Atomisierung: Die Probe wird in einen Ofen eingebracht, der durch Hindurchleiten von elektrischem Strom auf eine hohe Temperatur aufgeheizt wird. Dadurch wird die Probe in dem Ofen zunächst getrocknet, dann verascht und schließlich atomisiert. In dem Ofen bildet sich dann eine "Atomwolke" aus, in welcher das gesuchte Element in atomarer Form vorliegt. Das Meßlichtbündel wird durch diesen Ofen hindurchgeleitet.

Die Erfindung bezieht sich auf die Ausbildung eines solchen Ofens.

### Zugrundeliegender Stand der Technik

Es sind rohrförmige Ofen zur elektrothermischen Atomisierung von Proben für die Atomabsorptions -Spektroskopie in Form von "Graphitrohrküvetten" bekannt. Diese Öfen bestehen aus einem kleinen Rohr aus Graphit, das zwischen zu ringförmigen Kontakten eingespannt ist. Über diese Kontakte wird ein starker Strom in Längsrichtung durch das Rohr geleitet, wodurch das Rohr auf hohe Temperatur aufgeheizt werden kann. Die Probe wird durch eine seitliche Eingabeöffnung in das Rohr eingebracht und bei der Aufheizung des Rohres atomisiert. Das Meßlichtbündel verläuft in Längsrichtung durch die ringförmigen Kontakte und die Bohrung des Rohres. Ein Schutzgasstrom umspült das Rohr innen und außen und verhindert den Zutritt von Luftsauerstoff. Solche Graphitrohrküvetten sind in der DE-AS 23 14 207 und in der DE-AS 21 48 783 dargestellt und beschrieben.

Durch die DE-PS 25 54 950 ist ein Ofen zur elektrothermischen Atomisierung flüssiger Proben (Graphitrohr) bekannt, bei welchem im Inneren des rohrförmigen eigentlichen Ofenteils ein ebenfalls rohrförmiger Innenteil vorgesehen ist. Der Innenteil ist konzentrisch zu dem Ofenteil und erstreckt sich nur über einen mittleren Bereich des Ofenteils. Der Ofenteil hat in der Mitte eine seitliche Eingabeöffnung. Eine damit fluchtende Eingabeöffnung ist in dem rohrförmigen Innenteil angebracht. Der Innenteil ist mit dem Ofenteil durch längsverlaufende Rippen verbunden, die in der zu den Eingabeöffnungen senkrechten Längsebene verlaufen.

Durch diese Ausbildung des Ofens sollen Störungen vermieden werden, die dadurch auftreten, daß sich die eingebrachte Flüssigkeit über große Teile der Innenwand des Graphitrohres verbreiten und dabei zu den kühleren Endteilen des rohrformigen Ofens gelangt. Dort findet nur eine unvollständige Verdampfung statt, so daß Probenmaterial verschleppt wird und nachfolgende Messungen anderer Proben stört. Auch sollen Probenverluste vermieden werden, die durch Einsickern von Probenflüssigkeit in den porösen Graphit auftreten können.

Es ist erwünscht, die Atomisierung der Probe gegenüber der Aufheizung der Wandung des Ofens zu verzögern. Es soll dadurch sichergestellt werden, daß die Probenbestandteile, wenn sie atomisiert werden, sich nicht an kühleren Wandungsteilen niederschlagen können und daß die Probe möglichst schlagartig atomisiert wird, so daß ein starkes Absorptionssignal auftritt. Durch eine Veröffentlichung von L'vov in "Spectrochimica Acta" Bd 33B, 153-193 ist zu diesem Zweck eine Plattform von rechteckiger Grundform aus pyrolytischem Graphit bekannt, die in einen als Graphitrohr ausgebildeten Ofen eingesetzt wird. Um den Kontakt mit der Graphitrohrwandung zu verringern, sind längs der Längskanten der Plattform Ausschnitte angebracht. Auf diese Weise wird die Probe überwiegend indirekt durch Strahlung von der Innenwandung des Ofens aufgeheizt.

Die DE-PS 29 24 123 zeigt einen rohrförmigen Ofenkörper (Graphitrohr) mit einer Plattform, die eine Vertiefung zur Aufnahme der Probe aufweist und nur längs zweier gegenüberliegender Längskanten an dem Ofenkörper geführt ist.

Die auf diese Plattformen dosierbare Menge an Probe ist begrenzt. Es ergibt sich für den Benutzer außerdem die Schwierigkeit, daß in einen kleinen Ofenkörper eine noch kleinere Plattform eingesetzt werden muß. Das ist eine sehr umständliche Manipulation. Ein Teil des durch den Ofenkörper in Längsrichtung hindurchfließenden elektrischen Stromes fließt auch durch die Plattform. Die Plattform wird daher nicht nur indirekt durch Strahlung aufgeheizt. Vielmehr wird in der Plattform selbst Joulsche Wärme erzeugt.

## Offenbarung der Erfindung

Der Erfindung liegt die Aufgabe zugrunde, einen in Längsrichtung von Strom durchflossenen, rohrförmigen Ofen für die elektrothermische Atomisierung einer Probe bei der Atomabsorptions - Spektroskopie so auszubilden, daß einerseits die Probe indirekt mit Verzögerung gegenüber den sie umgebenden Wandungsteilen des Ofens beheizt wird und andererseits der Ofen bequem gehandhabt werden kann. Erfindungsgemäß wird diese Aufgabe bei einem Ofen der eingangs definierten Art dadurch gelöst, daß
(c) der Innenteil zylinderschalenförmig ausgebildet ist.

Nach der Erfindung ist der Innenteil an den rohrförmigen, äußeren Ofenkörper angeformt. Der Ofen ist daher mit dem Innenteil leicht zu handhaben. Im Gegensatz zu der oben diskutierten DE-OS 25 54 950 ist der Innenteil jedoch kein geschlossenes Rohr sondern ist zylinderschalenförmig und zu der Innenwandung des Ofenkörpers hin offen. Die auf den Innenteil aufgebrachte Probe wird daher mit Verzögerung gegenüber dem Ofenkörper aufgeheizt. Bei dem Ofen nach der DE-OS 25 54 950 wird zwar auch der Innenteil mit Verzögerung gegenüber dem eigentlichen Ofenkörper aufgeheizt. Die Probe "sieht" aber dort nicht die Innenwandung des Ofenkörpers sondern die Innenwandung des Innenteils und wird zusammen mit diesem Innenteil aufgeheizt. Die Wirkung, die · durch die verzögerte Aufheizung der Probe erzielt werden soll, tritt daher bei der DE-OS 25 54 958 nicht ein. Vielmehr treten -nun hinsichtlich des Innenteils- die gleichen Effekte auf, die durch die Plattformen der Veröffentlichung von L'vov und die DE-PS 29 24 123 vermieden werden sollen. Gegenüber den Öfen nach diesen letzteren Druckschriften ergibt sich der Vorteil der leichteren Handhabung des Ofens. Durch die zylinderschalenförmige Ausbildung des Innenteils ergibt sich der Vorteil, daß eine größere Probenmenge dosiert werden kann. Außerdem läßt sich ein solcher Ofen auch praktisch fertigen, da die Fertigung bequem beherrschbare Dreh-, Bohr- und Fräsvorgänge umfaßt. Es wäre praktisch nicht möglich, den Ofen etwa nach der DE-PS 29 24 123 mit der Plattform aus einem Stück zu fertigen.

Ausgestaltungen der Erfindung sind Gegenstand der Unteransprüche.

Ausführungsbeispiele der Erfindung sind nachstehend unter Bezugnahme auf die zugehörigen Zeichnungen näher erläutert.

## Kurze Beschreibung der Zeichnungen

Fig.1 ist ein Längsschnitt eines Ofens für die elektrothermische Atomisierung von Proben bei der Atomabsorptions - Spektroskopie.

Fig.2 ist eine Endansicht des Ofens von Fig. 1.

Fig.3 ist eine Ansicht eines "querbeheizten" rohrförmigen Ofens zur elektrothermischen Atomisierung von Proben bei der Atomabsorptions - Spektroskopie mit seitlichen Kontaktansätzen, in Richtung der Achse des Ofens gesehen.

Fig.4 ist eine Draufsicht auf den rohrformigen Ofen von Fig. 1 und die Kontaktansätze, von oben in Fig.3 gesehen.

Fig.5 ist eine Seitenansicht von rechts in Fig. 3 und 4 gesehen und teilweise im Schnitt, des rohrförmigen Ofens und eines mit diesem aus einem Stück bestehenden zylinderschalenförmigen Innenteils.

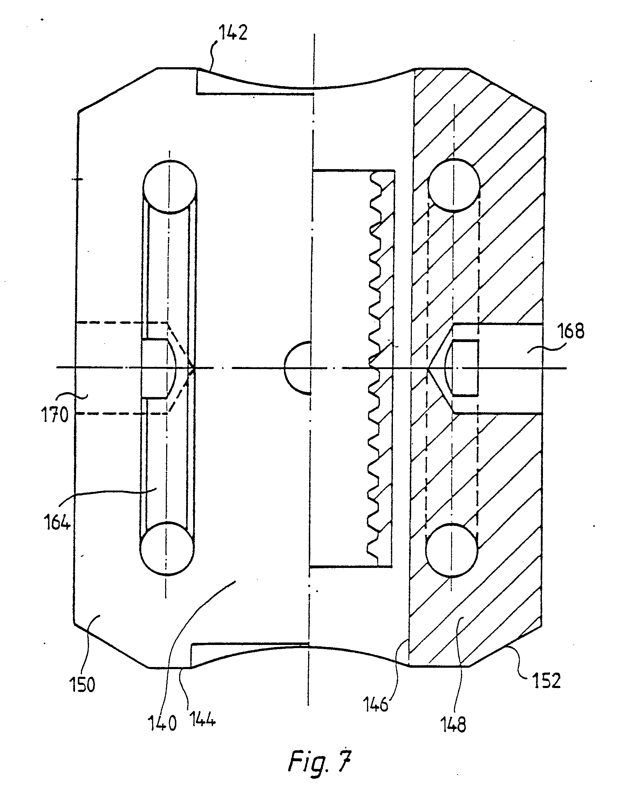

Fig .6 ist eine Ausführung des Ofens mit einer glatt-zylindrischen Innenfläche des Innenkörpers in einer Darstellung ähnlich Fig.5.

Fig.7 zeigt eine weitere Ausführungsform eines Ofens für die elektrothermische Atomisierung von Proben.

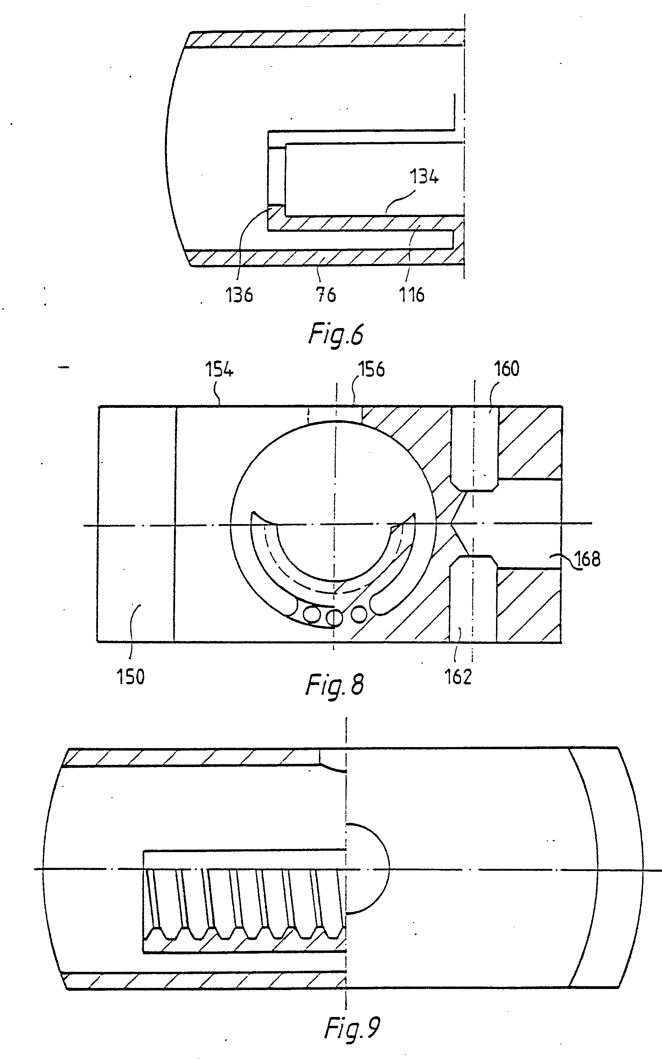

Fig.8 zeigt einen Schnitt senkrecht zur Ofenachse des Ofens von Fig.7.

Fig.9 zeigt einen Längsschnitt des Ofens von Fig.7 und 8 längs der Ofenachse.

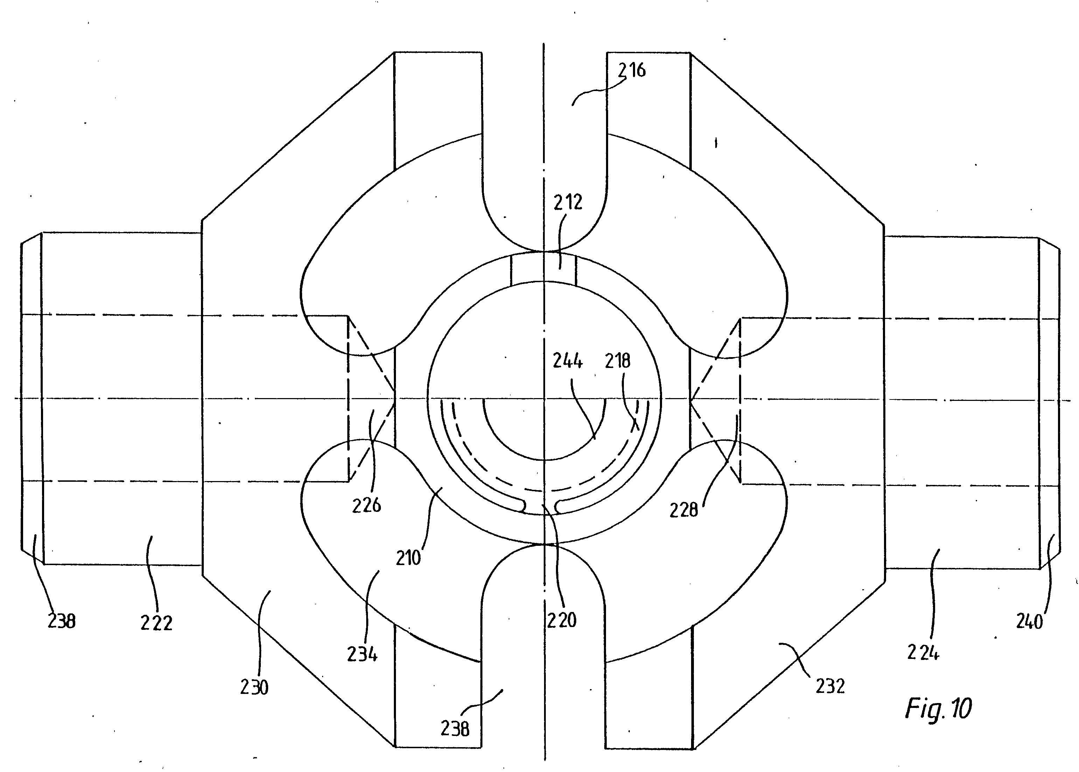

Fig.10 ist eine Ansicht eines Ofens für die elektrothermische Atomisierung einer Probe bei der Atomabsorptions - Spektroskopie, in Richtung der Achse des rohrförmigen Ofenkörpers gesehen.

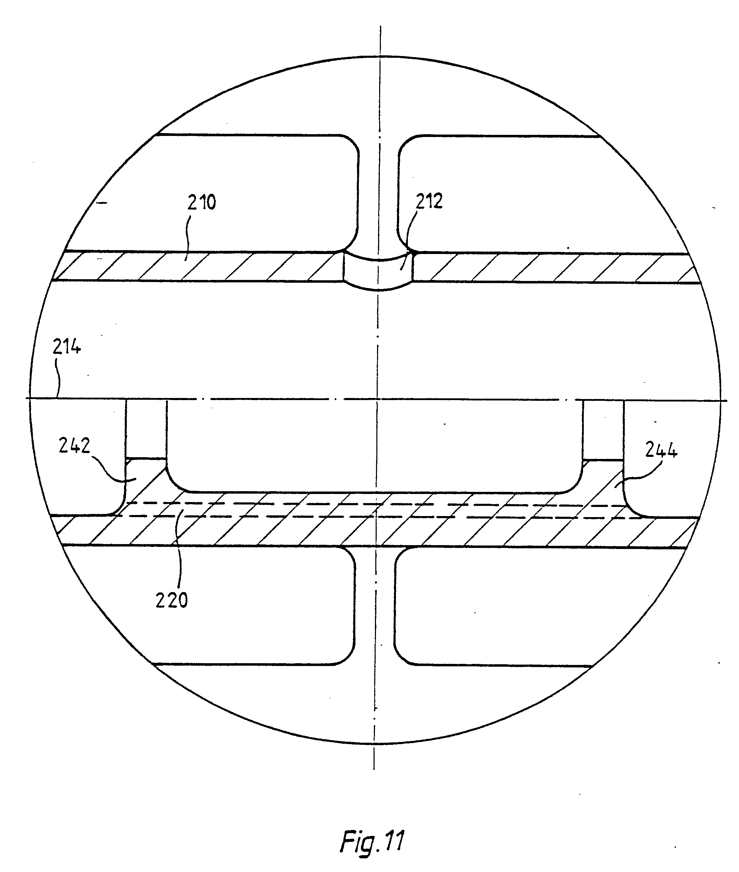

Fig. 11 ist ein Schnitt längs der Linie XI - XI von Fig.10.

### Bevorzugte Ausführung der Erfindung

Mit 10 ist ein rohrförmiger, äußerer Ofenkörper bezeichnet. Der Ofenkörper 10 besteht aus Graphit. An den Stirnflächen des Ofenkörpers 10 sind konische Kontaktflächen 12 und 14 gebildet. Diese Kontaktflächen wirken im Betrieb mit entsprechenden Flächen ringförmiger, geräteseitiger Kontakte zusammen, zwischen denen der Ofenkörper 10 gehalten wird. Über diese geräteseitigen Kontakte wird ein Strom in Längsrichtung durch den Ofenkörper 10 geleitet, durch welchen der Ofenkörper 10 aufgeheizt wird. Der Ofenkörper 10 weist in der Mitte eine seitliche Eingabeöffnung 16 auf.

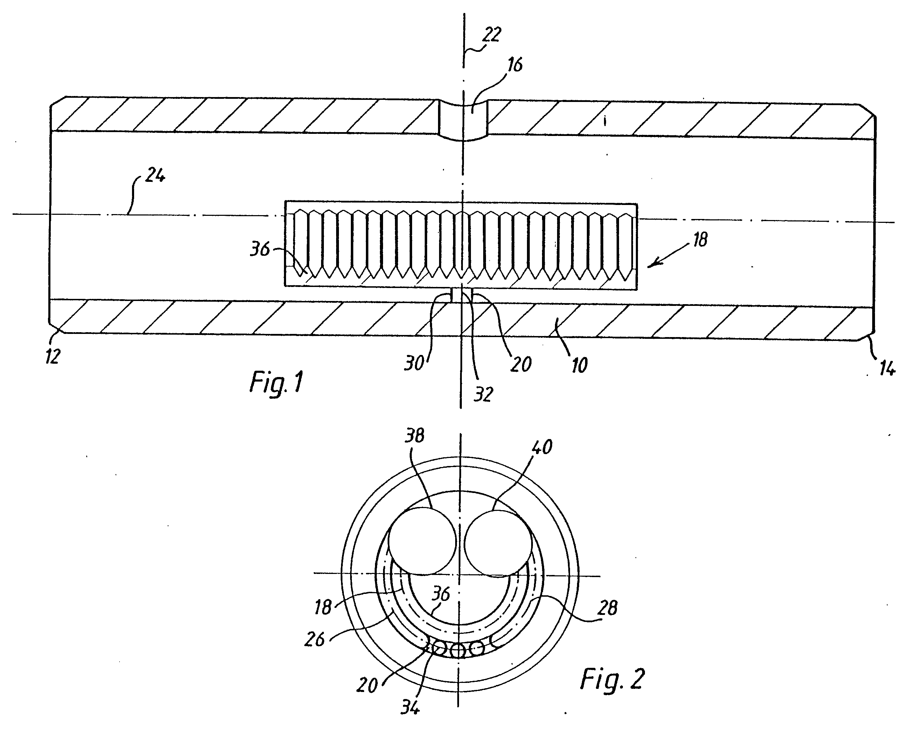

An den äußeren Ofenkörper 10 ist ein Innenteil 18 angeformt. Der Innenteil 18 ist zylinderschalenförmig und erstreckt sich in Umfangsrichtung über etwa 180° und in Längsrichtung über den mittleren Bereich des Ofenkörpers 10. Der Innenteil 18 ist wesentlich kürzer als der Ofenkörper 10. Der Innenteil 18 liegt der Eingabeöffnung 16 gegenüber. Der Innenteil 18 ist mit dem äußeren Ofenkörper 10 durch einen Steg 20 verbunden. Der Steg 20 liegt symmetrisch zu der durch die Achse der Eingabeöffnung 16 und die Längsachse 24 des Ofenkörpers 10 bestimmten Mittelebene und gegenüber der Eingabeöffnung. Diese Mittelebene ist die Papierebene in Fig. 1. Der Steg 20 erstreckt sich über einen im Vergleich zu dem zylinderschalenförmigen Innenteil 18 wesentlich kleineren Winkel symmetrisch zu der besagten Längsmittelebene. Auf diese Weise werden zwischen der Innenwandung des Ofenkörpers 10 und der Außenwandung des zylinderschalenförmigen Innenteils 18 im Bereich des Steges 20 bogenförmige Schlitze 26 und 28 gebildet. Der Steg 20 ist in Längsrichtung von planen Flächen 30 und 32 begrenzt und ist symmetrisch zu einer die Achse 22 der Eingabeöffnung 16 enthaltenden Radialebene.

In dem Steg sind eine Mehrzahl von axialen Bohrungen 34 angebracht.

Auf der Innenseite ist der zylinderschalenförmige Innenteil mit einer Mehrzahl von Vorsprüngen 36 versehen. Diese Vorsprünge 36 bilden einen Teil eines Gewindes.

Der Innenteil 18 ist bei diesem Ofen nicht von Strom durchflossen. Die verschiedenen Punkte des Stegs 20 liegen alle im wesentlichen auf dem gleichen Potential. Es erfolgt daher keine direkte Aufheizung des Innenteils durch Joulsche Wärme. Der Steg 20 ist schmal gehalten. Durch die Bohrungen 34 ist der Querschnitt weiter reduziert. Dadurch wird auch die lokale Aufheizung durch Wärmeleitung gering gehalten. Dabei bleibt aber eine hinreichende mechanische Festigkeit erhalten. Die auf den Innenteil 18 durch die Eingabeöffnung 16 aufgebrachte Probe wird mit dem Innenteil 18 selbst im wesentlichen indirekt durch die Strahlung der heißen Innenwandung des Ofenkörpers 10 aufgeheizt. Dadurch ist sichergestellt, daß die Probe erst atomisiert wird, wenn der Ofenkörper 10 selbst die Atomisierungstemperatur erreicht hat. Dieser äußere Ofenkörper 10 ist es auch, an welchem sich die atomisierten Probenatome niederschlagen würden, wenn Teile des Ofenkörpers 10 noch nicht die Atomisierungstemperatur erreicht hätten.

Um eine größere Menge an Probe auf dem Innenteil unterzubringen und einer Verteilung der Probe längs des Innenteils 18 entgegenzuwirken, sind die ein Gewinde bildenden Vorprünge 36 vorgesehen.

Der beschriebene Ofen ist relativ einfach zu fertigen:

Ein rohrförmiger Ofenkörper mit einem dazu konzentrischen, ebenfalls rohrförmigen Innenkörper, der in der Mitte über einen ringförmigen Steg mit dem Ofenkörper verbunden ist, kann durch Drehen hergestellt werden. In den rohrförmigen Innenkörper wird dann ein Gewinde geschnitten. Durch zwei Bohrungen, die in Fig.2 angedeutet und mit 38 und 40 bezeichnet sind, wird etwa die Hälfte des Innenkörpers zur Bildung des zylinderschalenförmigen Innenteils 18 abgetrennt. Die Bohrungen 34 werden angebracht. Weiterhin werden die Schlitze 26 und 28 gefräst. Schließlich wird die Eingabeöffnung 16 gebohrt.

Es läßt sich durch die beschriebene Formgebung somit ein Ofen aus Graphit herstellen, der von einen integralen Teil gebildet ist und eine Plattform gegenüber der Eingabe öffnung aufweist. Die ganze Anordnung ist mechanisch stabil. Sie zeigt günstige Eigenschaften sowohl hinsichtlich des Atomisierungsvorganges als auch hinsichtlich der aufgenommenen Probenmenge.

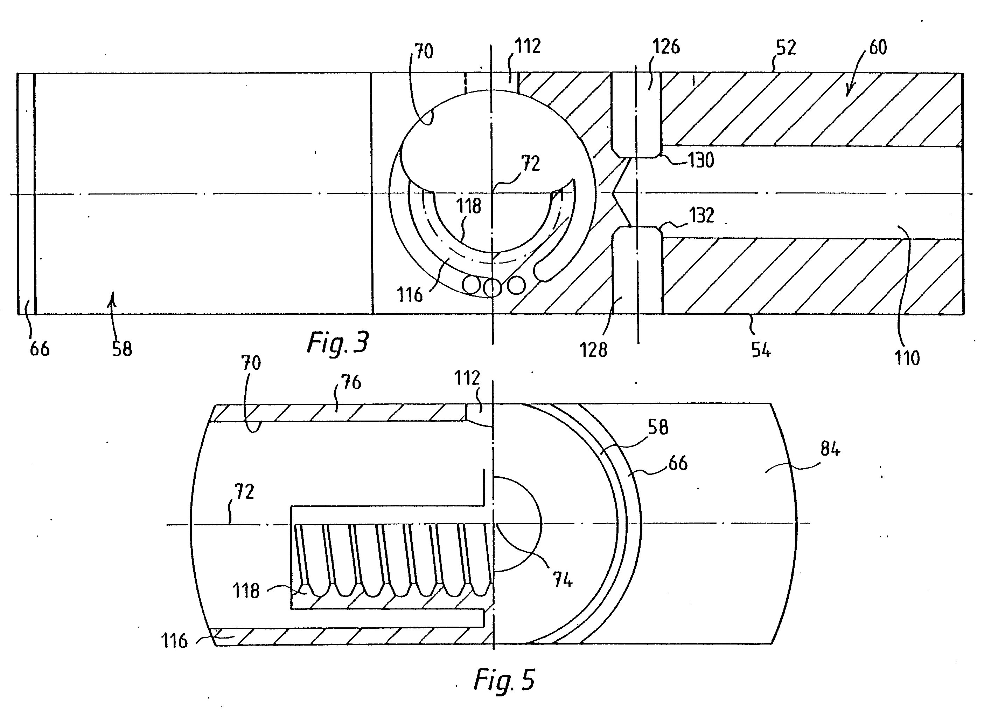

Bei dem Ofen von Fig.3 bis 5 ist mit 50 ein Graphitstück bezeichnet, das in seiner Grundform eine Platte mit einer oberen planen Fläche 52 und einer unteren planen Fläche 54 bildet. Das Graphitstück 50 weist einen Mittelteil 56 auf, der in Draufsicht im wesentlichen die Form eines regelmäßigen Achtecks besitzt. An zwei diametral gegenüberliegenden Seite dieses Achtecks sitzen Ansätze, welche Kontaktstücke 58 und 60 bilden. Diese Kontaktstücke 58 und 60 haben zylindrische Mantelflächen 62 bzw 64, sind aber oben und unten durch die planen Flächen 52 bzw. 54 begrenzt und dadurch abgeflacht. Die Kontaktstücke 58 und 60 haben konische Kontaktflächen 66 bzw. 68. Mit diesen Kontaktflächen 66 und 68 ist der Ofen zwischen geräteseitigen Kontakten gehalten, über welche die Stromzufuhr erfolgt.

Die zu den Seiten mit den Kontaktstücken 58, 60 senkrechten Seiten des Achtecks sind durch eine Bohrung 70 verbunden. Die Achse 72 der Bohrung 70 verläuft senkrecht zu der Achse 74 der Kontaktstücke. Die Bohrung 70 bildet den rohför-

migen Ofen. Der Teil des Mittelstücks 66 zwischen den durch die Bohrung 70 verbundenen Seiten bildet einen Ofenkörper 76.

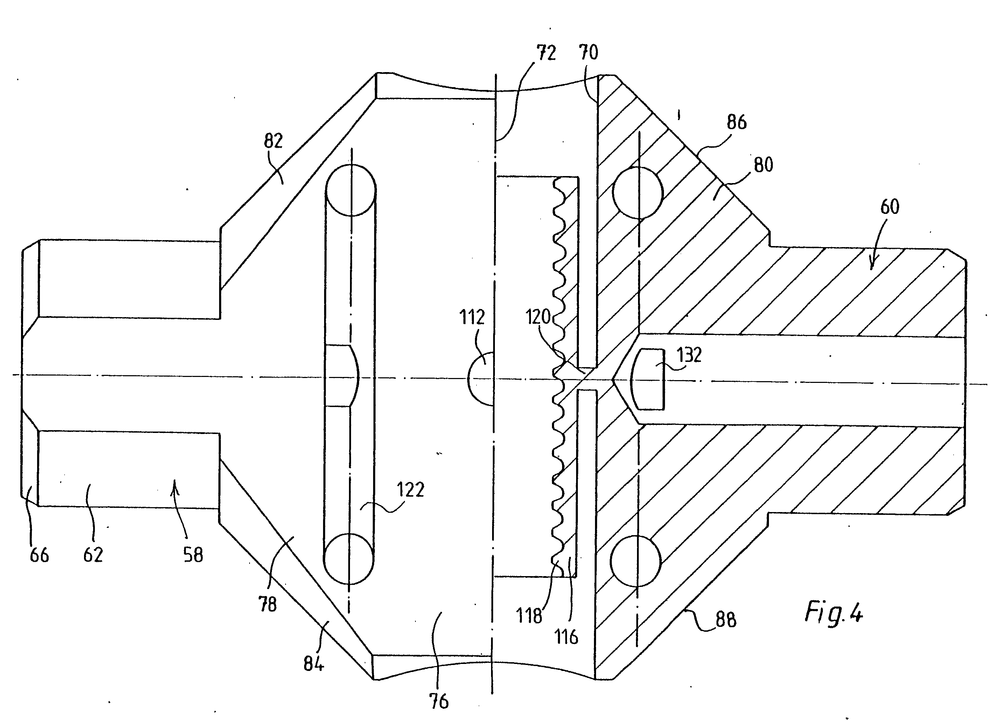

Zu beiden Seiten schließen sich an den Ofenkörper 76 Kontaktrippen 78 und 80 an. Die Kontaktrippen 78 und 80 sind in der Draufsicht von Fig.4 trapezförmig. Die Kontaktrippen 78 und 80 sind oben und unten durch die planen Flächen 52 und 54 und an den Seiten durch schräg verlaufende Seitenflächen 82,84 bzw. 86,88 begrenzt. Die lange Parallelseite des Trapezes grenzt jeweils an den Ofenkörper 76 an. Die schmale Parallelseite des Trapezes ist jeweils die ersterwähnte Seite des Achtecks und trägt das Kontaktstück 58 bzw. 60. Die Kontaktrippen 78 und 80 weisen Bereiche von vermindertem Querschnitt auf.

Bei dem Ofen nach Fig.3 bis 5 erfolgt die Verminderung des des Querschnitts für die Stromzufuhr längs des mittleren Bereichs des Ofenkörpers 76 durch Schlitze 122 und 126,128 in den planen Flächen 52 und 54. Die Schlitze sind parallel zur Achse 72 des Ofenkörpers 76 und enden im Abstand von den Seitenflächen 82,84 bzw. 86,88. Wie aus Fig.3 ersichtlich ist, werden die Schlitze, z.B. 126 und 128 von den Schutzgaskanälen, z.B. 110, angeschnitten. Das über die Schutzgaskanäle zuströmende Schutzgas tritt daher durch Öffnungen 130 und 132 in die Schlitze 126, 128 und tritt durch diese Schlitze auf beiden Seiten und längs des gesamten Ofenkörpers 76 aus.

Durch die Verringerung des Querschnittes für die Stromzufuhr im mittleren Bereich des Ofenkörpers 76 wird eine besonders gleichmäßige Temperaturverteilung erreicht.

Der Ofenkörper weist eine Eingabeöffnung 112 auf, durch welche eine zu analysierende Probe in den Ofen eingegeben werden kann. Die Achse 114 der Eingabeöffnung 112 ist senkrecht zu den Achsen 72 und 74 des Ofenkörpers 76 und der Kontaktstücke 58,60. Die Achse 114 der Eingabeöffnung 114 definiert zusammen mit der Achse 72 des Ofenkörpers 76 eine Längsmittelebene. Das ist eine Ebene senkrecht zur Papierebene in Fig.4 längs der Achse 72.

In der Bohrung 70 des Ofenkörpers 76 sitzt ein Innenkörper 116, der am besten in Fig.5 erkennbar ist. Der Innenkörper 116 ist zylinderschalenförmig, hat also etwa die Gestalt eines halben Hohlzylinders. Die Innenfläche des Innenkörpers 116 weist bei der Ausführung nach Fig.5 eine Folge von gewindeartigen Vorsprüngen 118 auf. Praktisch bilden die Vorsprünge 118 ein halbes Innengewinde. Diese Vorsprünge 118 hemmen das Auseinanderfließen einer durch die Eingabeöffnung eingebrachten flüssigen Probe in Längsrichtung des Innenkörpers 116. Die Herstellung der Vorsprünge 118 als Teil eines Innengewindes hat fertigungstechnische Gründe: Es kann dann zunächst in den rohrförmigen Innenkörper mittels eines Gewindeschneiders ein Gewinde geschnitten und der Gewindeschneider dann wieder herausgedreht werden. Anschließend wird, wie in Fig.3 dargestellt ist, die eine Hälfte des Innenkörpers mit zwei Längsbohrungen herausgebohrt. Der Innenkörper ist in dem Ofenkörper 76 nur über einen einzigen Steg 120 in der Mitte gehalten.

Von diesem Steg 120 sind anschließend bogenförmige Schlitze 121 zwischen Innenkörper 116 und Ofenkörper 76 herausgefräst, so daß der verbleibende Steg 120 sich über einen Winkel um die Achse 72 des Ofens erstreckt, der deutlich kleiner als 180° ist. Außerdem ist dieser verbleibende Steg 120 mit Bohrungen 123 parallel zur Achse 72 des Ofens versehen. Auf diese Weise wird verhindert, daß über den Steg ein Stromfluß stattfindet, der zu einer unmittelbaren Erhitzung des Innenkörpers 116 im Bereich des Steges 120 führen könnte. Es wird ja angestrebt, daß der Innenkörper 116 nur indirekt durch die Strahlung der Innenwandung des Ofenkörpers 76 erhitzt wird, so daß die Probe mit Verzögerung erst dann atomisiert wird, wenn die Innenwandung des Ofenkörpers schon heiß ist.

Der beschriebene Ofen wird mittels der Kontaktansätze 58,60 in einem Atomabsorptions - Spektrometer zwischen zwei Kontakten eingespannt. Das Meßlichtbündel des Atomabsorptions - Spektrometers tritt dabei längs der Achse 72 des Ofens durch den rohrförmigen Ofenteil wobei es oberhalb des Innenteils 116 verläuft. Auf den Innenteil wird durch die Eingabeöffnung 112 eine Probe aufgebracht. Durch Hindurchleiten von elektrischem Strom durch den Ofen wird dieser auf eine sehr hohe Temperatur aufgeheizt. Der Innenteil 116 wird dabei überwiegend indirekt durch Strahlung beheizt. Dabei wird die Probe atomisiert. Es bildet sich eine Atomwolke, in welcher die Elemente und auch ein gesuchtes Element in atomarem Zustand vorliegen. Aus der Absorption des von einer linienemittierenden Lichtquelle ausgehenden Meßlichtbündels in der Atomwolke kann auf die Menge des gesuchten Elements geschlossen werden. Die geräteseitigen Kontakte umschließen den Ofen weitgehend. Über die Kontakte wird Schutzgas zugeführt, damit kein Luftsauerstoff zu dem Ofen gelangen kann und der aus Graphit bestehende Ofen bei den hohen Temperaturen nicht verbrennt. Die beschriebenen Schlitzen und Bohrungen verteilen dieses Schutzgas, so daß der Ofen auf allen Seiten von dem Schutzgas umspült wird. Die Stromzufuhr erfolgt quer zur Richtung des Meßlichtbündels und zur Achse des Ofens. Durch die beschriebene Ausbildung wird eine optimal gleichmäßige Temperaturverteilung längs des Ofens erreicht.

Bei der Ausführung nach Fig.6 ist statt der gewindeförmigen Innenfläche des Innenkörpers 116 eine glatt zylindrische Innenfläche 134 vorgesehen. An den Enden des Innenkörpers 116 sind nach innen vorstehende Randleisten 136 gebildet. Eine solche Ausbildung des Innenkörpers 116 erleichtert die Beschichtung mit Pyrokohlenstoff. .

Fig.7 bis 9 zeigt eine Ausführungsform bei welcher keine zylindrischen Kontaktstücke vorgesehen sind. Der Ofen wird von einem Graphitkörper 140 von quaderartiger Grundform gebildet. In dem Graphitkörper ist zwischen zwei Stirnflächen 142 und 144 eine Bohrung 146 angebracht. Der Teil des Graphitkörpers 140 zwischen den Stirnflächen 142 und 144 mit der Bohrung 146 bildet einen Ofenkörper 148. Zwei gegenüberliegende Längsseiten des Graphitkörpers 140 sind konisch abgedreht und bilden konische Kontaktflächen 150 und 152, welche an den geräteseitigen Kontakten anliegen. In der in Fig.8 oberen Fläche 154 des Graphitkörpers 140 ist eine Bohrung 156 als Eingabeöffnung angebracht. Die Bohrung 156 mündet in der Bohrung 146. Die Achsen der Bohrungen 146 und 156 definieren wieder eine Längsmittelebene. In der Fläche 154 und der gegenüberliegenden Fläche 158 (unten in Fig.8) sind beiderseits des Ofenkörpers 148 Schlitze 160,162 bzw. 164 angebracht. Die Schlitze erstrecken sich jeweils über den mittleren Teil des Ofenkörpers 148. Wie aus Fig.8 ersichtlich ist, werden die Schlitze 160, 162 von Schutzgaskanälen 168, 170 angeschnitten. In dem Ofenkörper ist ein Innenkörper 116 gehalten. Die Ausbildung und Halterung des Innenkörpers 116 ist die gleiche wie bei der Ausführung nach Fig.3 bis 5 und deshalb nicht noch einmal im einzelnen beschrieben. Entsprechende Teile tragen in dieser Hinsicht in Fig.7 bis 9 die gleichen Bezugszeichen wie in Fig.3 bis 5.

Bei der Ausführung nach Fig. 10 und 11 enthält der Ofen für die thermoelektrische Atomisierung von Proben für die Atomabsorptions - Spektroskopie einen rohrförmigen, elektrisch leitenden Ofenkörper 210. Der Ofenkörper 210 besteht aus Graphit. Der Ofenkörper 210 weist eine seitliche Eingabeöffnung 212 auf. Wie aus Fig.2 ersichtlich ist, liegt die Eingabeöffnung 212 im mittleren Bereich des Ofenkörpers 210. Durch die Achse der Eingabeöffnung 212 und die Achse 214 des Ofenkörpers 210 ist eine Längsmittelebene 216 des Ofens bestimmt. Der Schnitt von Fig.2 erfolgt längs dieser Längsmittelebene. Innerhalb des Ofenkörpers 210 sitzt ein Innenkörper 218. Der Innenkörper 218 ist mit dem Ofenkörper 210 aus einem Stück hergestellt. Der Innenkörper 218 erstreckt sich nur über den mittleren Bereich des Ofenkörpers 210.

Der Innenkörper 218 ist zylinderschalenförmig. Wie aus Fig. 10 ersichtlich ist, ist der Innenkörper 218 bei der dargstellten bevorzugten Ausführung halbzylindrisch, d.h. bildet einen sich über 180° um seine Achse erstreckenden halben Hohlzylinder. Der Innenkörper 218 ist symmetrisch zu der oben erwähnten Längsmittelebene 216, der Eingabeöffnung 212 gegenüberliegend angeordnet. Im Betrieb sitzt die Eingabeöffnung 212 oben. Die Längsmittelebene 216 verläuft vertikal. Der Innenkörper 218 sitzt unten in dem Ofenkörper unter der Eingabeöffnung 212. Der Innenkörper 218 steht durch einen einzigen Steg 220 mit dem rohrförmigen Ofenkörper 210 in Verbindung. Der Steg ist in der Längsmittelebene 216 des Ofens und auf der der Eingabeöffnung 212 gegenüberliegenden Seite angeordnet.

Der Ofenkörper 210 ist über seitlich an dem Ofenkörper 210 angebrachte Kontaktstücke 222 und 224 durch einen in Umfangsrichtung des Ofenkörpers 210 fließenden elektrischen Strom beheizbar. Dadurch sind alle Punkte des Steges 220 auf im wesentlichen dem gleichen Potential, so daß kein Strom über den Innenkörper 218 fließt. Der Innenkörper 218 wird daher in keiner Weise durch einen elektrischen Strom direkt beheizt.

Der Ofenkörper 210 ist über Stege 226 und 228, die sich senkrecht zu der Längsmittelebene 216 erstrecken, mit zwei Halbschalen 230 bzw. 232 verbunden. Die Halbschalen 230 und 232 erstrecken sich auf beiden Seiten um den Ofenkörper 210, so daß ein den Ofenkörper 210 umschließender Hohlraum 234 gebildet wird. Zwischen den Halbschalen 230 und 232 ist ein die Längsmittelebene 216 enthaltender, zu dieser symmetrischer Schlitz 236 gebildet. Durch den Schlitz 236 ist auch die Eingabeöffnung 212 zugänglich. Die zylindrischen Kontaktstücke 222 und 224 sind an den Halbschalen 230 bzw. 232 angeformt. Ihre Achsen verlaufen senkrecht zu der besagten Längsmittelebene 216. Die Kontaktstücke 222 und 224 sind somit nur über den Ofenkörper in elektrisch leitender Verbindung. An ihren Enden bilden die Kontaktstücke 222 und 224 konische Kontaktflächen 238 und 240. Mit diesen Kontaktflächen 238,240 wird der Ofen zwischen (nicht dargestellten) geräteseitigen Elektroden gehalten.

Wie aus Fig. 10 ersichtlich ist, bilden die Stege 226 und 228 Einschnürungen, stellen also einen erhöhten elektrischen Widerstand dar. Dadurch wird in den Stegen erhöhte Joulsche Wärme und eine höhere Temperatur erzeugt. Auch wird der Wärmeabfluß von dem heißen Ofenkörper 210 zu den relativ kalten Kontaktstücken 222 und 224 behindert. Dadurch wird eine gleichmäßige Temperaturverteilung in dem Ofenkörper 210 gewährleistet.

In den Hohlraum 234 kann über die Kontaktstücke in nicht näher dargestellter Weise Schutzgas eingeleitet werden. Wie aus Fig.2 ersichtlich ist, bildet der halbzylindrische Innenkörper 218 an seinen Enden nach innen vorstehende Randleisten 242 und 244. Dadurch entsteht eine trogartige Plattform, in welcher eine eingegebene flüssige Probe sicher gehalten wird.

## Ansprüche

1. Ofen zur elektrothermischen Atomisierung von Proben für die Atomabsorptions - Spektroskopie, enthaltend

(a) einen rohrförmigen, elektrisch leitenden Ofenteil (10), und

(b) einen an den Ofenteil (10) angeformten, über einen Steg (20) im Abstand von der Wandung des Ofenteils (10) in dem Ofenteil (10) gehaltenen Innenteil (18), der sich in Axialrichtung nur über einen mittleren Bereich des Ofenteils (10) erstreckt, **dadurch gekennzeichnet, daß**

(c) der Innenteil (18) zylinderschalenförmig ausgebildet ist.

2. Ofen nach Anspruch 1 **dadurch gekennzeichnet, daß,**

(a) der rohrförmige Ofenteil (10) in der Mitte eine seitliche Eingabeöffnung (16) aufweist und

(b) der zylinderschalenförmige Innenteil (18) der Eingabeöffnung (16) gegenüberliegend angeordnet und zu der Eingabeöffnung (16) hin offen ist.

3. Ofen nach Anspruch 2, **dadurch gekennzeichnet, daß** der Innenteil (18) auf der der Eingabeöffnung (16) abgewandten Seite durch einen Steg (20), der sich in Umfangsrichtung über einen Teil des Umfangs des Innenteils (18) erstreckt, mit dem rohrförmigen Ofenteil (10) verbunden ist.

4. Ofen nach Anspruch 3, **dadurch gekennzeichnet, daß** der Steg (20)mit einer Mehrzahl von axialen Bohrungen (34) versehen ist.

5. Ofen nach einem der Ansprüche 1 bis 4, **dadurch gekennzeichnet, daß** die Innenfläche des Innenteils (18) mit Vorsprüngen (36) versehen ist, die einen Teil eines Gewindes bilden.

6. Ofen nach einem der Ansprüche 1 bis 4, **dadurch gekennzeichnet, daß** die Innenfläche des Innenkörpers glatt zylindrisch ist und an den Enden des Innenkörpers nach innen vorstehende Abschlußleisten gebildet sind.

7. Ofen nach einem der Ansprüche 1 bis 6, **dadurch gekennzeichnet, daß** der rohrförmige Ofenteil auf gegenüberliegenden Seiten seitliche Kontaktansätze aufweist, über welche der Ofen zwischen geräteseitigen Kontakten gehalten wird und über welche ein Strom in Umfangsrichtung durch das rohrförmige Ofenteil hindurchleitbar ist.

8. Ofen nach Anspruch 7, **dadurch gekennzeichnet, daß** die Kontaktansätze zwei gegenüberliegende, längsverlaufende Kontaktrippen aufweist, an welche sich Kontaktstücke von zylindrischer Grundform anschließen.

9. Ofen nach Anspruch 7 oder 8, **dadurch gekennzeichnet, daß**

(a) der Ofenkörper (210) über Stege (226,228), die sich senkrecht zu der Längsmittelebene (216) erstrecken, mit zwei Halbschalen (230,232) verbunden ist, welche auf beiden Seiten um den Ofenkörper (210) herumgreifen und zwischen sich einen die Längsmittelebene (216) enthaltenden Längsschlitz (238) bilden, und

(b) an den Halbschalen (230,232) zylindrische Kontaktstücke (222,224) angeformt sind, deren Achsen senkrecht zu der besagten Längsmittelebene (216) verlaufen.

10. Ofen nach Anspruch 9, **dadurch gekennzeichnet, daß** die zylindrischen Kontaktstücke (222,224) an ihren Enden konische Kontaktflächen (238,240) bilden, mit denen der Ofen zwischen geräteseitigen Elektroden gehalten wird.

11. Ofen nach Anspruch 9 oder 10, **dadurch gekennzeichnet, daß** die Stege (226,228) Einschnürungen bilden.

Fig. 1

Fig. 2

EP 0 321 879 A2

Fig. 3

Fig. 5

Fig.4

EP 0 321 879 A2

Fig. 7

**Fig.6**

134

136     76     116

**Fig. 8**

154     156     160

168

150     162

**Fig.9**

Fig. 10

*Fig.11*